Europäisches Patentamt

European Patent Office

Office européen des brevets

(11) Publication number: **0 309 186**
**A1**

# EUROPEAN PATENT APPLICATION

(21) Application number: 88308681.1

(22) Date of filing: 20.09.88

(51) Int. Cl.⁴: **E21B 43/08** , **B01D 29/14** , **B01D 29/48**

(30) Priority: 24.09.87 AR 308829

(43) Date of publication of application:
29.03.89 Bulletin 89/13

(84) Designated Contracting States:
CH DE FR GB IT LI NL

(71) Applicant: Harguindey, Julian Enrique
Canos Filtros Johnson S.A. Cochabamba 340
1603 Villa Martelli Buenos Aires(AR)

(72) Inventor: Harguindey, Julian Enrique
Canos Filtros Johnson S.A. Cochabamba 340
1603 Villa Martelli Buenos Aires(AR)

(74) Representative: Newby, John Ross et al
J.Y. & G.W. Johnson Furnival House 14/18
High Holborn
London WC1V 6DE(GB)

(54) **Improved helically wound screen and method of making the same.**

(57) A screw-threaded end fitting is provided by forming the thread (14) directly on the outwardly facing surface of the final turns of wire (9, 15), being the turns of wire in contact with each other and welded onto support rods (11), thus forming a non-porous surface.

FIG.5B

EP 0 309 186 A1

## Improved helically wound screen and method of making the same

This invention relates to a helically wound cylindrical screen of the kind used in a well or bore hole to filter out solid particles above a particular size from a stream of fluid entraining such particles. For convenience in the ensuing description the term "well screen" will be used to describe such a device.

Cylindrical well screens are widely used at the lower end of the extraction pipe in the withdrawing of oil or water from underground deposits and a commonly used construction of such well screens has a screening section providing a continuous filtering slot formed between adjacent turns of a "wire" would around an internal supporting cage (e.g. of spaced-apart axially-extending rods). The word "wire" is normally used for the helically wound slot-defining member of the well screen, but this should not be taken to mean that it must be of metal since screen "wires" of synthetic plastics material are used for well screens and the present invention does not exclude the use of plastics materials.

The slotted screening section of a well screen needs to be secured to another well screen or the extraction pipe at its upper end and to another well screen or a pipe closing member at its lower end and for this purpose it is known to locate an end fitting at either or both ends of the wire wound screening section of the well screen which provides the filtering slot(s). US-A-1223969, US-A-1950202 and US-A-4428423 each discloses an arrangement in which a terminal coupling provided with an externally machined screw thread on to one end of the helically wrapped wire. In the first mentioned US patent specification the turns of wrapped wire surround the end fitting while in the second and third, the end fitting overlies the end of the turns of wire constituting the screening section of the well screen. US-A-4365669 discloses a different form of externally-threaded end fitting which although located inside the turns of the wire making up the screening section, is secured in place by a thermal welding technique.

In each of these prior art arrangements a separate end fitting has to be provided and has to be secured in place over or inside the final turns of the wire making up the screening section of the well screen.

Adding fittings to either end of the screening section of a well screen must be effected ensuring alignment of both and avoiding deterioration of the mechanical properties of the completed device such as its tensile strength and torsion resistance. In the case of metallic well screens, the end fittings are typically of the same metal and are welded to the screening section by various means. Well screens made of synthetic material typically have their end fittings added by means of adhesives. Both methods require finishing the screen body ends, fabricating the fittings separately and bonding both together. In the case of metallic well screens it usually requires highly skilled labour to effect correct attachment of the component parts together.

This invention seeks to avoid the need for a separate end fitting by providing an attachment screw thread of an end fitting directly in the turns of screen wire.

According to one aspect of the invention a well screen having a screening section defined by spaced-apart helical turns of wire and means providing a screw thread at one end of the screening section, is characterised in that the screw thread is formed directly in the outwardly facing surface of the final turns of wire.

Typically, the forming of the threads will be undertaken by a machining or thread-cutting operation, the turns of wire subjected to this operation being of reduced pitch or enhanced width so that they abut and form a non-perforated end region of the screening section. Conveniently the final turns of wire are of a different cross-sectional shape to the turns defining the slotted screening section so that substantial areas of wire are available for side-by-side engagement in the final turns but confronting surfaces in the screening section provide a slot width which increases in the radially inward direction.

Preferably the helical turns of wire are supported by an array of cylindrically arranged rods with the helicoidal wire welded to these rods. The cylindrically arranged rods can have cross sections of any suitable shape (e.g. rectangles, triangles, circles or ovals).

Well screens of the kind described are fabricated in a machine designed for that purpose, such that a cylindrical arrangement of parallel rods are simultaneously rotated and advanced longitudinally while continuously feeding a wrapping wire welded at each contact point with the rods producing the external helicoid. This helicoid will have a separation between wires determined by the rate of longitudinal advance with respect to the rate of rotation.

The cross section of the wire is usually triangular or trapezoidal but could also be circular and is arranged in such a way that the gap between turns, called the slot opening, becomes larger from the narrowest point to the inside of the cylindrical structure that has been formed. This feature is very desirable since it produces a non-clogging, self-cleaning well screen.

A well screen in accordance with this invention has great versatility of use and can be fabricated in a range of diameters, from a few mm to many tens of cms.

According to a further aspect of the invention a method of making a well screen having a porous screening section defined by spaced-apart helical turns of wire and means providing a screw thread at one end of the screening section, the screening section being produced by winding turns of wire in spaced-apart disposition around a supporting cage and at said one end of the screening section the turns are in contact to form a non-porous cylindrical surface, is characterised in that the screw thread is formed directly in the said non-porous cylindrical surface.

The method of the invention results in a substantial improvement in the manufacture of the described type of well screen, giving it a different structure at either or both ends so as to allow machining without altering the physical structure, functional properties and performance of the screen.

The invention thus permits machining of the external surface of one or each end of a well screen which is axially beyond the porous screening section of a well screen to provide a finished end or ends that allows coupling of a component without adding end fittings and ensures alignment of the coupled component and screening section. Further the provision of means for such coupling can be provided without downgrading the mechanical properties of the screening section.

The great advantages offered by the invention can be summarised as follows:

a) There is no need for welded or bonded end fittings.

b) The use of foreign materials such as welding electrodes or adhesives are avoided, thus improving reliability of the product.

c) The well screen is made entirely of one material, avoiding in the case of metallic screens different electromotive potentials which can represent a corrosion risk in ground water applications

d) Any alignment problem between the screening section and end fitting is avoided.

e) Product aesthetics are improved since there is no joint between the screening section and an end fitting.

f) Tensile and load strength are improved to the actual structural capability of the screening section (welding and bonding areas are points of failure when well screens are destruction tested). and

g) Fabrication costs in a wide range of actual applications are reduced particularly in the case of small diameter screens (100 mm) and short lengths up to 3 metres.

The invention is expected to have special application in the fabrication of other elements of media retention such as nozzles, collectors, filter elements, line filters, resin traps, strainers, baskets, distribution columns, distributors, laterals, etc., used in filtration, purification and treatment of all types of liquids and gases, particularly in filtering beds, ion exchange, catalytic processes, etc..

The invention will now be further described, by way of example, with reference to the accompanying drawings, in which

Figures 1A to 1G illustrate different "standard" wrapping wire profiles which can be used to form the screening section of a well screen according to the invention,

Figure 2 illustrates a preferred embodiment of wire profile for the non-porous cylindrical machinable surface defining an end of the screening section according to this invention,

Figure 3 is a longitudinal cross section of a piece of well screen in which coupling threads are machined according to this invention,

Figure 4 is a view in perspective of the internal face of half a prior art well screen cut longitudinally so as to show the traditional means of providing an end thread,

Figure 5A is similar to Figure 4 but showing a well screen according to this invention, and

Figure 5B is another view in perspective of the well screen of Figure 5A but illustrating its external face in which the threads machined on the screen body can be seen.

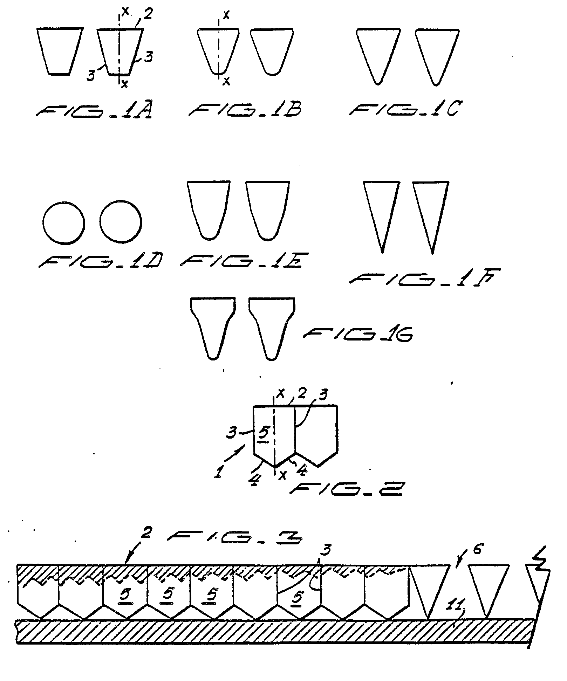

The same reference numbers have been used in the different Figures to represent similar parts. As explained above, the external body of the well screen is made by the helical wrapping of a profiled wire, defining a helicoidal slot. The cross section of this wire is of utmost importance, as the geometrical shapes are relevant for its practical applications. As illustrated in Figure 1A to Figure 1G such profiles can be trapezoids (1A), triangular (1B, 1C, 1F), circular (1D), pentagonal (1E) and "T" shaped (1G).

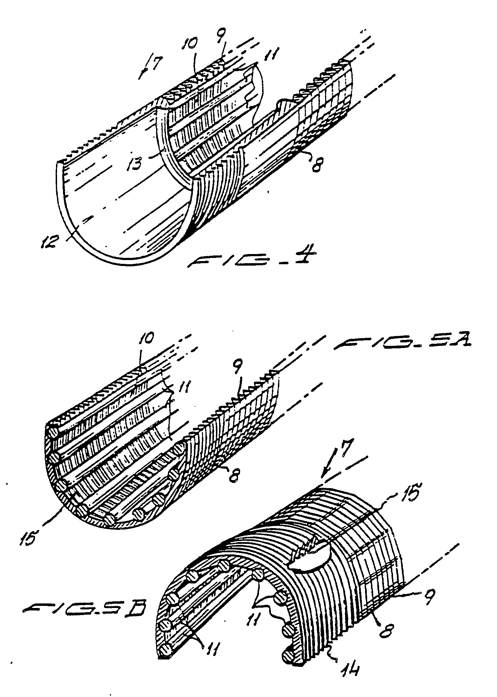

In its preferred embodiment, this invention proposes a new profiled wire 1 for the first and/or last turns of the helical wrapping, its cross section being illustrated in Figure 2 in which it can be clearly seen that in general the wire has an outer face 2 from which lateral walls 3 extend straight and parallel ending in a "V" shaped tip 4. The outer face 2 and the lateral walls 3 define a cross section 5 which made up of a plurality of turns becomes a volume of material able to be worked (machined) to obtain threads on the screen as will be explained. The parallel lateral walls 3 engage one another in the final turns to give a strong cylindrical surface in which a screw thread can be formed. It is relevant for the purpose of this invention to have a greater volume of material at the or each end of the screening section in which to form the grooves of the screw thread without weakening the end of the well screen.

It will be noted in Figures 1A to 1G that a common feature of all the standard profiles is that the walls 3 are inclined inwardly towards a central axis X-X of the cross section of the wire, which means a gradual decrease of the volume of wire material at reducing radial distances from the longitudinal axis of the well screen, making it difficult, if not impossible, to machine a screw thread in the end of the screening section if standard wire profiles were used throughout.

It can be clearly seen in Figure 3 that a plurality of turns of the profiled wire shown in Figure 2 provide an external surface 2 which is very suitable for the machining of screw threads. This is the case because there are negligible interstices or gaps between the walls 3.

The machining of the external face of a continuous slot screen in the manner described provides ends that allow coupling or finishing without adding conventional end fittings. The fabrication of the screen shown partially in Figure 3 commences by feeding a special profiled wire as a helical wrapping which has a cross section that does not correspond to any used previously in a well screen and whose features are: increased dimensions in width and height, parallel lateral walls and a weldable tip so that the wire can be welded to the rods 11 of a support cage at each point of contact. During this initial stage of fabrication, the rate of longitudinal advance of the wire is set to produce a negligible separation between the turns of the profiled wire. Once the region at the end of the well screen that is intended to be machined has been completed with the special profiled wire, fabrication is interrupted and a standard profiled wire replaces the special profiled wire. Normal fabrication then continues with the wire turns now spaced apart to provide the helical slot 6 required for the screening section. When the next region intended to be machined is reached, the fabrication is again interrupted to allow the standard wire to be replaced with the modified profiled wire. Fabrication is resumed at reduced pitch turns until the cylindrical area that is intended to be machined is completed. A virtually zero separation between turns of the special profiled wire is maintained in all machinable areas to provide a non-porous region in those areas.

What has been described can be seen from Figure 3, the cross-section 5 of the special profiled wire can be seen to provide adjacent walls with a virtual zero slot opening therebetween. Therefore, in this end section of the screen, the profiled wire is identical to that illustrated in Figure 2, whereas in the screening section where the fluid will be admitted through the slots 6, standard wire profiles are provided similar to Figure 1C as there is no need for machining in this section.

The resulting continuous slot screen body presents identical features to those of a traditional well screen in all structural aspects except for the additional length of the areas that are to be machined, and that these areas present a smooth surface to the naked eyd in contrast to the slot openings of the screening section.

These smooth surfaces are machined and allow cutting tool penetration into the material to machine threads, rings, collars, etc..

Figure 4 illustrates a longitudinal section of a traditional well screen 7 in which an end fitting that must be welded to the screen body proper can be seen. The screening body 8 is wound with standard profiled wire 9, defining a slot 10, having the wire welded to the rods 11 spaced and arranged so as to form a supporting cylindrical cage. These rods 11 support the helical wire structure, giving the screen body the mechanical properties required to sustain the loads to which it is subjected. To this screen body 8, an end fitting 12 is welded by means of a welding bead 13 which is internal to the screen structure. Fitting 12 could have, for example, internal or external screw threads 14 to provide coupling capability to the well screen.

Figures 5A and 5B represent perspective views of a well screen according to this invention which allows machining directly on the screen body 8, previously impossible due to the inherent weakness of the region. This screen also includes the traditional array of rods 11 to which a standard profiled wire 9 is welded defining the screen slots 10.

The external aspect of a well screen in accordance with this invention is represented in Figure 5B where the rods 11 can be seen and a screw thread 14 is machined on the end of the screening section where the helical turns of wire provide virtually zero gap and enhanced volume of wire and surface area because of the new profiled wire 15 used in this region.

From what has been said it will be understood that by means of a simple modification of known techniques a wide range of different end fittings can be provided on a well screen without resort to welding and bonding fittings on the screen body.

The great advantages offered by this invention reduce the final cost of a well screen without detracting from the great virtues of continuous slot screens.

## Claims

1. A well screen (7) having a screening section (8) defined by spaced-apart helical turns of wire (9) and means providing a screw thread (14) at one end of the screening section (8), characterised in that the screw thread (14) is formed directly in the outwardly facing surface of the final turns of wire (15).

2. A well screen as claimed in claim 1, characterised in that the wire (15) used for the final turns has a cross-section with parallel lateral faces (3) which are in contact over said final turns to provide a non-porous cylindrical surace (2) which can be provided with a screw thread without destroying the non-porous nature of the well screen surface over the end region.

3. A well screen as claimed in claim 1 or claim 2, characterised in that in the slotted screening section (8) of the well screen the wire (9) used provides a slot (6) whose width increases in the radially inward direction.

4. A well screen as claimed in any preceding claim, characterised in that the helical turns of wire (9, 15) are supported on an array of cylindrically arranged rods (11) and are welded to these rods.

5. A method of making a well screen having a porous screening section defined by spaced-apart helical turns of wire and means providing a screw thread at one end of the screening section, the screening section being produced by winding turns of wire in spaced-apart disposition around a supporting cage and at said one end of the screening section the turns are in contact to form a non-porous cylindrical surface, characterised in that the screw thread is formed directly in the said non-porous cylindrical surface.

6. A method as claimed in claim 5, characterised in that a wire of different profile is used for the first and/or the last few turns around the cage to produce said cylindrical surface than is used for the central turns making up the screening section.

7. A method as claimed in claim 5 or claim 6, characterised in that a reduced winding pitch is used for the said cylindrical surface than is used for the screening section.

8. A method as claimed in any one of claims 5 to 7, characterised in that the screw thread is machined directly in the said non-porous cylindrical surface.

FIG.1A

FIG.1B

FIG.1C

FIG.1D

FIG.1E

FIG.1F

FIG.1G

FIG.2

FIG.3

_FIG_4

_FIG_5A

_FIG_5B

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A,D | US-A-4 428 423  (R. KOEHLER et al.)<br>* Column 1, lines 8-13,41-50; figures 1,2 *<br><br>----- | 1,3-5,7 | E 21 B   43/08<br>B 01 D   29/14<br>B 01 D   29/48 |
| | | | **TECHNICAL FIELDS SEARCHED (Int. Cl.4)**<br><br>E 21 B<br>B 01 D<br>E 03 B |

The present search report has been drawn up for all claims

| Place of search | Date of completion of the search | Examiner |
|---|---|---|
| THE HAGUE | 28-11-1988 | RAMPELMANN K. |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

                    

& : member of the same patent family, corresponding
    document

EPO FORM 1503 03.82 (P0401)